# EUROPÄISCHE PATENTSCHRIFT

(11) **EP 4 239 428 B1**
(45) Veröffentlichungstag und Bekanntmachung des Hinweises auf die Patenterteilung: **28.01.2026**
(21) Anmeldenummer: 22203506.5
(22) Anmeldetag: 25.10.2022
(51) Int. Cl.: G05D 1/00

(54) **VERFAHREN UND SYSTEM ZUR NAVIGATION EINES FLURFÖRDERZEUGS**
METHOD AND SYSTEM FOR NAVIGATING AN INDUSTRIAL TRUCK
PROCÉDÉ ET SYSTÈME DE NAVIGATION D'UN CHARIOT DE MANUTENTION

(30) Priorität: 23.11.2021 DE 102021130631
(43) Veröffentlichungstag der Anmeldung: 06.09.2023
(60) Teilanmeldung: 25224905.7
(73) Patentinhaber: STILL GmbH, 22113 Hamburg (DE)
(72) Erfinder: ABEL, Bengt, 21335 Lüneburg (DE); KÖNIG, Ralf, 21365 Adendorf (DE); SCHÜTHE, Dennis, 21255 Tostedt (DE); VIERECK, Volker, 23898 Kühsen (DE)
(74) Vertreter: Patentship Patentanwaltgesellschaft

(56) Entgegenhaltungen:
- EP-A1- 3 904 993
- DE-A1- 102019 217 160
- KR-A- 20120 108 277
- US-A1- 2020 042 010
- HAIHONG ZHANG ET AL: "A topological Area Coverage Algorithm for Indoor Vacuuming Robot", AUTOMATION AND LOGISTICS, 2007 IEEE INTERNATIONAL CONFERENCE ON, IEEE, PISCATAWAY, NJ, USA, 1 August 2007 (2007-08-01), pages 2645 - 2649, XP031139234, ISBN: 978-1-4244-1531-1
- FOLKER WIENTAPPER ET AL: "Reconstruction and Accurate Alignment of Feature Maps for Augmented Reality", 3D IMAGING, MODELING, PROCESSING, VISUALIZATION AND TRANSMISSION (3DIMPVT), 2011 INTERNATIONAL CONFERENCE ON, IEEE, 16 May 2011 (2011-05-16), pages 140 - 147, XP031896478, ISBN: 978-1-61284-429-9, DOI: 10.1109/3DIMPVT.2011.25

## Beschreibung

Die Erfindung betrifft ein Verfahren zur Navigation eines Flurförderzeugs, insbesondere eines autonomen oder automatisierten Flurförderzeugs, mit einer Sensorik zur Erkennung von Informationen im Betriebsbereich des Flurförderzeugs und einer Datenverarbeitungseinrichtung zur Auswertung dieser Informationen und Erstellung von Navigationsanweisungen und/oder Steuerungsbefehlen zur Navigation des Flurförderzeugs, wobei ausgehend von einer Erkundungsfahrt zunächst in der Datenverarbeitungseinrichtung eine Umgebungskarte in einem Fahrzeugkoordinatensystem mit Hilfe der Sensorik erstellt wird und bei einer späteren Navigationsfahrt eine von der Sensorik aktuell aufgenommene Szene in der Datenverarbeitungseinrichtung mit der Umgebungskarte verglichen wird und eine Lokalisierung des Flurförderzeugs im Fahrzeugkoordinatensystem durchgeführt wird, wobei mindestens eine Markierung mit bekannter globaler Position im Betriebsbereich des Flurförderzeugs mittels der Sensorik erfasst wird.

Außerdem betrifft die Erfindung ein System zur Durchführung des Verfahrens.

Beim Betrieb von Flurförderzeugen kommen vermehrt Navigationssysteme zum Einsatz, die einen automatisierten oder teilautomatisierten Betrieb eines Flurförderzeugs ermöglichen sollen. Da Flurförderzeuge meistens in definierten Betriebsbereichen, zum Beispiel in Warenlagern, eingesetzt werden, können hierfür ortsbezogene Navigationssysteme genutzt werden. Dabei werden im Warenlager beispielsweise Zeichen, Linien und Schilder oder auch Barcodes und Funkstationen zur Übermittlung von Identifikationssignalen (Funkbeacons) angebracht. Diese Informationen sind aber nur abrufbar, wenn sie in ein Managementsystem für den Betrieb des Flurförderzeugs eingetragen werden. Das Flurförderzeug kann über einen Sensor, zum Beispiel einem optischen Sensor, diese Informationen erfassen und mittels einer Datenverarbeitungseinrichtung mit den Eintragungen im Managementsystem vergleichen. Auf diese Weise ist eine erleichterte manuelle oder automatische Navigation des Flurförderzeugs im Warenlager möglich.

Es sind auch schon Methoden vorgeschlagen worden, mit denen sich ein autonomes oder automatisiertes Flurförderzeug selbst in unbekannten Umgebungen lokalisieren kann. Hierzu gehört die sogenannte SLAM-Methode, die seit einigen Jahren in der Robotik verwendet wird. "SLAM" ist die englische Abkürzung für "Simultaneous Localization and Mapping". Hierbei wird ausgehend von einer Erkundungsfahrt des Flurförderzeugs im Betriebsbereich zunächst eine Umgebungskarte mit Hilfe der genutzten Sensorik am Roboter, die zum Beispiel Kameras, Laserscanner und Ultraschallsensoren umfassen kann, erstellt. Kommt das autonome oder automatisierte Flurförderzeug an einer Position entlang, die das Flurförderzeug schon kartografiert hat, kann das Flurförderzeug sich mittels seiner Karte und der Messwerte der Sensorik lokalisieren. Dabei findet auch ein Update der Karte statt, falls sich die von der Sensorik aufgenommene Szene von der Karte unterscheidet. Dies kann zum Beispiel der Fall sein, wenn Paletten oder Fahrzeuge ihre zuvor kartografierte Position verändert haben.

Begonnen hat die SLAM-Methode mit Lasersensorik und wurde dann in den Jahren erweitert auf andere Sensoriken, wie zum Beispiel 2D- und 3D-Kameras, Inertial Measurement Units (IMUs), Ultraschallsensoren etc..

Der Nachteil der SLAM-Methode besteht darin, dass bei Initialisierung des autonomen oder automatisierten Flurförderzeugs die aktuelle Fahrzeugposition als Ursprung, also mit einer Pose bezüglich der Raumachsen x = y = z = 0 und bezüglich der Raumwinkel phi = psi = rho = 0, angenommen wird, ohne einen Bezug zur Umgebung oder zu anderen Fahrzeugen herzustellen.

Das Problem, dass sich mehrere autonome oder automatisierte Flurförderzeuge eine gemeinsame Karte teilen und sich über ein Referenzkoordinatensystem austauschen, wurde von der Wissenschaft unter dem Stichwort Multi-Vehicle-SLAM (MVSLAM) gelöst. Auch wenn hier die einzelnen autonomen oder automatisierten Flurförderzeuge sich zu einem Referenzsystem einigen, fehlt ihnen der Bezug zur Umgebung. Es fehlt also ein Referenzsystem, das auch die Umgebung, zum Beispiel eine Lagerhalle, nutzt, um beispielsweise Regalpositionen und ähnliches anzugeben.

Die Grundlagen der SLAM-Methode sind in der folgenden Fachliteratur beschrieben:
(1) D. Moratuwage, B. Vo and D. Wang, "A hierarchical approach to the Multi-Vehicle-SLAM-Problem", 2012 15 th International Conference on Information Fusion, Singapore, 2012, pp. 1119-1125.
(2) F. Zhang, H. Stähle, G. Chen, C. Buckl and A. Knoll, "Multiple vehicle cooperative localization under random finite set framework", 2013 IEEE/RSJ International Conference on Intelligent Robots and Systems, Tokyo, 2013, pp. 1405-1411.
(3) D. Moratuwage, B. Vo and D. Wang, "Collaborative multi-vehicle SLAM with moving object tracking", 2013 IEEE International Conference on Robotics and Automation, Karlsruhe, 2013, pp. 5702-5708.

Aus der EP 3 904 993 A1 ist ein gattungsgemäßes Verfahren mit den Merkmalen des Oberbegriffs des Patentanspruchs 1 bekannt.

Die DE 10 2019 217 160 A1 offenbart ein computer-implementiertes Verfahren zum Erstellen einer Umgebungskarte für das Betreiben eines mobilen Agenten.

FOLKER WIENTAPPER ET AL, "Reconstruction and Accurate Alignment of Feature Maps for Augmented Reality", 2011 INTERNATIONAL CONFERENCE ON 3D IMAGING, MODELING, PROCESSING, VISUALIZATION AND TRANSMISSION, Seiten 140-147, DOI: 10.1109/3DIMPVT.2011.25, ISBN 978-1-61284-429-9, offenbart einen vorbereitenden Prozess des Abrufens genauer Merkmalskarten für ein kamerabasiertes Tracking-System.

Der vorliegenden Erfindung liegt die Aufgabe zugrunde, ein Verfahren der genannten Art sowie ein System zur Durchführung des Verfahrens so auszugestalten, dass eine verbesserte Lokalisierung des Flurförderzeugs ermöglicht wird.

Diese Aufgabe wird verfahrensseitig erfindungsgemäß dadurch gelöst, dass durch Auswertung der Sensordaten in der Datenverarbeitungseinrichtung ein Referenzkoordinatensystem des Betriebsbereichs festgelegt wird, und die im Fahrzeugkoordinatensystem erstellte Umgebungskarte in der Datenverarbeitungseinrichtung mit dem Referenzkoordinatensystem des Betriebsbereichs abgeglichen wird, und die Lokalisierung des Flurförderzeugs im Fahrzeugkoordinatensystem in der Datenverarbeitungseinrichtung in eine Lokalisierung des Flurförderzeugs im Referenzkoordinatensystem des Betriebsbereichs überführt wird.

Dabei liegt der Erfindung die Überlegung zu Grunde, dass durch Festlegung eines Referenzkoordinatensystems ein Bezug zwischen dem mit der SLAM-Methode oder einem anderen Kartierungsverfahren mittels der Sensorik des Flurförderzeugs aufgenommenen Umgebungskarte und der tatsächlichen Betriebsumgebung des autonomen oder automatisierten Flurförderzeugs hergestellt werden kann. Dadurch wird ein Verständnis des autonomen oder automatisierten Flurförderzeugs darüber erzeugt, wo es sich in der eigenen erstellten Umgebungskarte und in der globalen Arbeitsumgebung befindet. Dies ermöglicht zugleich ein Abgleichen von Umgebungskarten verschiedener Flurförderzeuge.

In einer vorteilhaften Ausgestaltung wird eine Markierung verwendet, deren dreidimensionale Pose, insbesondere deren translatorische Position in den drei Raumachsen x, y und z sowie deren räumliche Orientierung durch Raumwinkel-Drehungen um die drei Raumachsen, bekannt ist. In diesem Fall genügt eine einzige Markierung, um ein Referenzkoordinatensystem festzulegen.

Da in realen Anwendungen die Raumwinkelinformationen in der Regel nicht bekannt sind, sieht eine bevorzugte Weiterbildung der Erfindung vor, dass mindestens zwei Markierungen verwendet werden, deren translatorische Positionen in den drei Raumachsen x, y und z bekannt sind.

Zweckmäßigerweise wird als Markierung eine natürliche Markierung im Betriebsbereich des Flurförderzeugs, insbesondere ein Infrastrukturelement, zum Beispiel ein Schild, eine Regalstütze oder eine Wand, verwendet. Wichtig ist dabei eine eindeutige Zuordnung. Gibt es mehrere dieser natürlichen Markierungen mit ähnlicher Anordnung im Raum, sind diese als natürliche Markierung nicht geeignet.

Zusätzlich oder alternativ kann als Markierung auch eine künstliche Markierung, insbesondere ein Reflektor, ein QR-Code oder ein Aruco-Marker, verwendet werden. Derartige künstliche Markierungen können zudem die Eindeutigkeit erhöhen, da sie so in der Umgebung nicht natürlich vorkommen.

Bei den beiden genannten Markierungsverfahren unter Nutzung von natürlichen oder künstlichen Markierungen ist es von Vorteil, wenn dem, beispielsweise auf der SLAM-Methode basierenden, Kartierungsverfahren mitgeteilt wird, auf welche Markierung das Referenzkoordinatensystem gelegt wird und wie sich dieses zu der Markierung verhält.

Gemäß einer besonders bevorzugten Weiterbildung des Erfindungsgedankens wird mindestens eine Markierung verwendet, die maschinenlesbare Informationen, insbesondere Codes, zu ihrer globalen Position enthält, welche mittels der Sensorik abgerufen und in der Datenverarbeitungseinrichtung ausgewertet werden, um die im Fahrzeugkoordinatensystem erstellte Umgebungskarte mit dem Referenzkoordinatensystem abzugleichen.

Für die Sensorik wird vorzugsweise eine optische Sensorik verwendet, die insbesondere eine 2D- oder 3D-Kamera umfasst. Mit der optischen Sensorik können die Markierungen und deren gegebenenfalls vorhandenen maschinenlesbaren Informationen einfach erfasst werden.

Außerdem ist es zur Erhöhung der Robustheit des Verfahrens von Vorteil, wenn eine größere Anzahl von für das Flurförderzeug gut sichtbaren Markierungen im Betriebsbereich des Flurförderzeugs, zum Beispiel in einer Lagerhalle, platziert sind.

Die Codes der Markierungen enthalten die globale Position in den drei Raumachsen x, y und z, wobei für die Fahrzeuglokalisierung in der Regel nur zwei Raumachsen x und y benötigt werden. Dies hat zudem den Vorteil, dass sich das Flurförderzeug immer wieder erneut referenzieren kann und einen erneuten Abgleich seiner Pose zur Referenzpose der Markierungen machen kann.

Ein entscheidender Vorteil der Erfindung besteht auch darin, dass durch den Einsatz weniger Markierungen, die über den gesamten Einsatzraum des Flurförderzeugs verteilt sind, Skalierungsfehler, die bei herkömmlichen visuellen SLAM-Verfahren (LDSO, ORB-SLAM, etc.) entstehen, korrigiert werden können. Dadurch kann gewährleistet werden, dass auch selbst erlernte, beispielsweise geteachte Umgebungskarten dauerhaft global korrekt bleiben, so dass auf künstlicher Basis, zum Beispiel mittels CAD-Tool etc., erzeugte Positionsinformationen überlagerter Systeme, wie zum Beispiel für das Warenmanagement, verwendet werden können. Die geteachten Umgebungskarten heutiger SLAM-basierter Systeme, müssen händisch korrigiert werden. Anfahrpositionen können nicht aus künstlich erzeugten Positionen abgeleitet werden, sondern müssen ebenfalls aufwändig geteacht werden. Derartige unattraktive Nachbearbeitungsschritte können mit der Erfindung insofern entfallen.

In einer technisch einfachen Variante der Erfindung ist vorgesehen, dass die Umgebungskarte von einer Anzeigeeinrichtung, zum Beispiel einem am Flurförderzeug verbauten Display oder einem Smartphone, angezeigt wird und eine Bedienperson interaktiv das Referenzkoordinatensystem an der Anzeigevorrichtung setzen kann.

Die Erfindung betrifft ferner ein System zur Durchführung des Verfahrens zur Navigation eines Flurförderzeugs mit einer am Flurförderzeug angeordneten Sensorik zur Erkennung von Informationen im Betriebsbereich des Flurförderzeugs und einer Datenverarbeitungseinrichtung zur Auswertung dieser Informationen und Erstellung von Navigationsanweisungen und/oder Steuerungsbefehlen zur Navigation des Flurförderzeugs, wobei die Datenverarbeitungseinrichtung dazu eingerichtet ist, aus Sensordaten einer Erkundungsfahrt eine Umgebungskarte in einem Fahrzeugkoordinatensystem zu erstellen und aus Sensordaten einer Navigationsfahrt eine Lokalisierung des Flurförderzeugs in der Umgebungskarte durchzuführen, wobei mindestens eine Markierung mit bekannter globaler Position im Betriebsbereich des Flurförderzeugs vorgesehen ist, die durch die Sensorik detektierbar ist.

Bei dem System wird die gestellte Aufgabe erfindungsgemäß dadurch gelöst, dass die Datenverarbeitungseinrichtung dazu eingerichtet ist, aufgrund der bekannten Position der Markierung ein Referenzkoordinatensystem des Betriebsbereichs festzulegen und die im Fahrzeugkoordinatensystem erstellte Umgebungskarte mit dem Referenzkoordinatensystem des Betriebsbereichs abzugleichen und die Lokalisierung des Flurförderzeugs im Fahrzeugkoordinatensystem des Betriebsbereichs in eine Lokalisierung des Flurförderzeugs im Referenzkoordinatensystem zu überführen.

Die Erfindung bietet eine ganze Reihe von Vorteilen:
Das erfindungsgemäße Verfahren senkt den Aufwand zur Einrichtung eines Navigationssystems eines autonomen oder automatisierten Flurförderzeugs für das Bedienpersonal vor Ort oder einen Servicetechniker, der dies als Serviceleistung mit anbieten kann. Aktuell ist eine manuelle Kalibrierung des Navigationssystems eines autonomen oder automatisierten Flurförderzeugs nur durch spezialisiertes Fachpersonal möglich. Mit der Erfindung wird eine automatische Einrichtung durch das Flurförderzeug selbst ermöglicht.

Der Vorteil ist zudem, dass ein bestehendes Referenzkoordinatensystem, das zum Beispiel für ein betreiberseitiges Managementsoftwaresystem verwendet wird, nicht für jedes Flurförderzeug abgeändert werden muss. Es genügt ein Referenzkoordinatensystem, das eine Lokalisierung der Flurförderzeuge innerhalb einer Umgebung ermöglicht und somit die Ausführung von Aufträgen erlaubt. Dadurch können ohne großen Einrichtungsaufwand die Flurförderzeuge beauftragt werden. Zudem haben alle in einem Betriebsbereich vorhandenen autonomen oder automatisierten Flurförderzeuge ein gemeinsames Referenzkoordinatensystem und können somit miteinander besser agieren.

Weitere Vorteile und Einzelheiten der Erfindung werden anhand der in den schematischen Figuren dargestellten Ausführungsbeispiele näher erläutert. Hierbei zeigen
- Figur 1: ein Prinzipbild für den Zusammenhang zwischen Fahrzeugkoordinatensystem und Referenzkoordinatensystem,
- Figur 2: eine Darstellung natürlicher Markierungen zur Referenzkoordinatenbestimmung,
- Figur 3: eine alternative Darstellung natürlicher Markierungen zur Referenzkoordinatenbestimmung und
- Figur 4: eine Darstellung künstlicher Markierungen zur Referenzkoordinatenbestimmung.

In den unterschiedlichen Figuren sind dieselben Merkmale mit denselben Bezugsziffern bezeichnet.

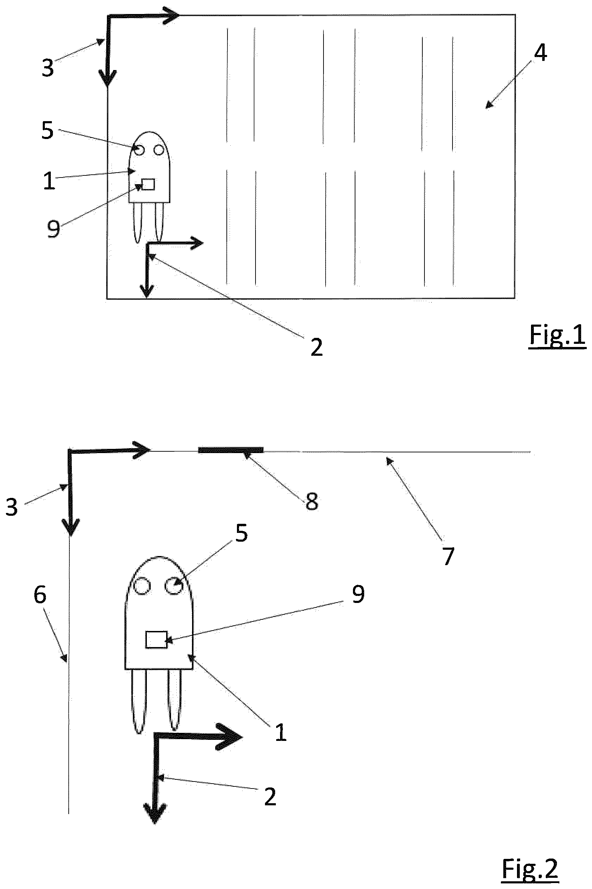

In der Figur 1 ist der prinzipielle Zusammenhang zwischen dem Fahrzeugkoordinatensystem 2 eines autonomen oder automatisierten Flurförderzeugs 1 und dem Referenzkoordinatensystem 3 des Betriebsbereichs, beispielswiese einer Lagerhalle 4, dargestellt. Zunächst wird ausgehend von einer Erkundungsfahrt im Betriebsbereich in der Datenverarbeitungseinrichtung 9 des Flurförderzeugs 1 eine Umgebungskarte des Betriebsbereichs mit Hilfe der Sensorik 5 des Flurförderzeugs 1, die zum Beispiel Kameras, Laserscanner und Ultraschallsensoren umfassen kann, erstellt. Kommt das Flurförderzeug 1 an einer Position entlang, die es schon kartografiert hat, kann es sich mittels seiner Umgebungskarte und der Messwerte der Sensorik 5 lokalisieren. Um einen Bezug zwischen der mit beispielsweise der SLAM-Methode oder einem anderen Kartierungsverfahren mittels der Sensorik 5 aufgenommenen Umgebungskarte und der tatsächlichen Betriebsumgebung des Flurförderzeugs 1 herzustellen, wird das Referenzkoordinatensystem 3 festgelegt, das sich beispielsweise an Infrastrukturelementen des Betriebsbereichs, beispielsweise der Lagerhalle 4, orientiert. Dadurch wird ein Verständnis des Flurförderzeugs 1 darüber erzeugt, wo es sich in der eigenen erstellten Umgebungskarte und in der globalen Arbeitsumgebung befindet. Das Referenzkoordinatensystems 3 des Betriebsbereichs ist das Verständnis des Betreibers oder einer Managementsoftware, die z.B. Regale, Ladungsträger usw. kartiert und dafür das Referenzkoordinatensystem 3 als einen Bezugspunkt hat. Mit dem Bezug des Fahrzeugkoordinatensystem 2 auf das Referenzkoordinatensystem 3 des Betriebsbereichs ist ein Abgleichen von Karten verschiedener Flurförderzeuge und das Bearbeiten von Aufträgen durch Flurförderzeuge möglich, beispielsweise fahre zu Position x, y, z und lager dort eine Palette aus.

In der Figur 2 ist die Verwendung natürlicher Markierungen 6, 7, 8 zur Festlegung des Referenzkoordinatensystems 3 gezeigt. Bei den Markierungen 6 und 7 handelt es sich um Wandflächen einer Lagerhalle, deren globale Positionen im Referenzkoordinatensystem 3 bekannt sind und die von der Sensorik 5 des Flurförderzeugs 1 erfasst werden. Bei der Markierung 8 handelt es sich um ein Schild, beispielsweise ein Notausgangsschild, das an einer bekannten globalen Position des Referenzkoordinatensystems 3 aufgestellt ist und ebenfalls mittels der Sensorik 5 detektiert wird. Durch Auswertung der Sensordaten in der Datenverarbeitungseinrichtung 9 des Flurförderzeugs 1 wird das Referenzkoordinatensystem 3 festgelegt. Das Fahrzeugkoordinatensystem 2 wird mit dem Referenzkoordinatensystem 3 abgeglichen, so dass in der Datenverarbeitungseinrichtung 9 die globale Lokalisierung des Flurförderzeugs 1 in der Arbeitsumgebung ermöglicht wird.

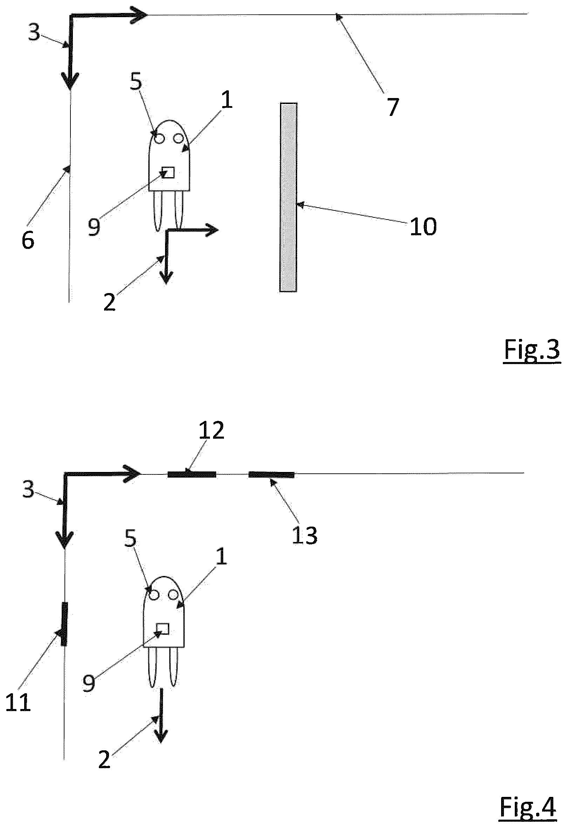

Die Figur 3 zeigt eine alternative Darstellung natürlicher Markierungen 6, 7, 10 zur Referenzkoordinatenbestimmung. Bei den Markierungen 6 und 7 handelt es sich wiederum um Wandflächen einer Lagerhalle, deren globale Positionen im Referenzkoordinatensystem 3 bekannt sind und die von der Sensorik 5 des Flurförderzeugs 1 erfasst werden. Als Markierung 10 dient in diesem Fall ein Regal oder Regalstützen eines Regals, dessen globale Position in der Lagerhalle 4 und somit im Referenzkoordinatensystem 3 ebenfalls bekannt ist und die von der Sensorik 5 des Flurförderzeugs 1 erfasst wird. Ansonsten entspricht die Anordnung der Figur 3 der Figur 2.

In der Figur 4 ist die Verwendung künstlicher Markierungen 11, 12, 13 zur Festlegung des Referenzkoordinatensystems 3 gezeigt. Die Markierungen 11, 12, 13 enthalten QR-Codes, die von der, insbesondere als Kamera ausgebildeten, Sensorik 5 des Flurförderzeugs 1 abgelesen werden können. Die QR-Codes enthalten Informationen zu den globalen Positionen der Markierungen 11, 12, 13 im Referenzkoordinatensystem 3. Die Markierungen 11, 12, 13 und deren Informationen zu den globalen Positionen im Referenzkoordinatensystem 3 werden von der Sensorik 5 des Flurförderzeugs 1 erfasst. Durch Auswertung dieser Informationen in der Datenverarbeitungseinrichtung 9 des Flurförderzeugs 1 kann das Referenzkoordinatensystem 3 festgelegt und eine Beziehung zum Fahrzeugkoordinatensystem 2 hergestellt werden, so dass eine globale Lokalisierung des Flurförderzeugs 1 ermöglicht wird.

## Patentansprüche

1. Verfahren zur Navigation eines Flurförderzeugs (1) mit einer Sensorik (5) zur Erkennung von Informationen im Betriebsbereich des Flurförderzeugs (1) und einer Datenverarbeitungseinrichtung (9) zur Auswertung dieser Informationen und Erstellung von Navigationsanweisungen und/oder Steuerungsbefehlen zur Navigation des Flurförderzeugs (1), wobei ausgehend von einer Erkundungsfahrt zunächst in der Datenverarbeitungseinrichtung (9) eine Umgebungskarte in einem Fahrzeugkoordinatensystem (2) mit Hilfe der Sensorik (5) erstellt wird und bei einer späteren Navigationsfahrt eine von der Sensorik (5) aktuell aufgenommene Szene in der Datenverarbeitungseinrichtung (9) mit der Umgebungskarte verglichen wird und eine Lokalisierung des Flurförderzeugs (1) im Fahrzeugkoordinatensystem (2) durchgeführt wird, wobei mindestens eine Markierung (6, 7, 8, 10, 11, 12, 13) mit bekannter globaler Position im Betriebsbereich des Flurförderzeugs (1) mittels der Sensorik (5) erfasst wird, **dadurch gekennzeichnet, dass** durch Auswertung der Sensordaten in der Datenverarbeitungseinrichtung (9) ein Referenzkoordinatensystem (3) des Betriebsbereichs festgelegt wird, und die im Fahrzeugkoordinatensystem (2) erstellte Umgebungskarte in der Datenverarbeitungseinrichtung (9) mit dem Referenzkoordinatensystem (3) des Betriebsbereichs abgeglichen wird, und die Lokalisierung des Flurförderzeugs (1) im Fahrzeugkoordinatensystem (2) in der Datenverarbeitungseinrichtung (9) in eine Lokalisierung des Flurförderzeugs (1) im Referenzkoordinatensystem (3) des Betriebsbereichs überführt wird.

2. Verfahren nach Anspruch 1, **dadurch gekennzeichnet, dass** eine Markierung (6, 7, 8, 10, 11, 12, 13) verwendet wird, deren dreidimensionale Pose, insbesondere deren translatorische Position in den drei Raumachsen x, y und z sowie deren räumliche Orientierung durch Raumwinkel-Drehungen um die drei Raumachsen, bekannt ist.

3. Verfahren nach Anspruch 1 oder 2, **dadurch gekennzeichnet, dass** mindestens zwei Markierungen (6, 7, 8, 10, 11, 12, 13) verwendet werden, deren translatorische Positionen in den drei Raumachsen x, y und z bekannt sind.

4. Verfahren nach einem der Ansprüche 1 bis 3, **dadurch gekennzeichnet, dass** als Markierung (6, 7, 8, 10, 11, 12, 13) eine natürliche Markierung (6, 7, 8, 10), insbesondere ein Infrastrukturelement, zum Beispiel ein Schild (8), eine Regalstütze (10) oder eine Wand (6; 7), verwendet wird.

5. Verfahren nach einem der Ansprüche 1 bis 3, **dadurch gekennzeichnet, dass** als Markierung (6, 7, 8, 10, 11, 12, 13) eine künstliche Markierung (11, 12, 13), insbesondere ein Reflektor, ein QR-Code oder eine Aruco-Markierung, verwendet wird.

6. Verfahren nach einem der Ansprüche 1 bis 3 oder 5, **dadurch gekennzeichnet, dass** mindestens eine Markierung (6, 7, 8, 10, 11, 12, 13) verwendet wird, die maschinenlesbare Informationen zu ihrer globalen Position enthält, welche mittels der Sensorik (5) abgerufen und in der Datenverarbeitungseinrichtung (9) ausgewertet werden, um die im Fahrzeugkoordinatensystem (2) erstellte Umgebungskarte mit dem Referenzkoordinatensystem (3) abzugleichen.

7. System zur Durchführung des Verfahrens zur Navigation eines Flurförderzeugs (1), insbesondere eines Verfahrens nach einem der Ansprüche 1 bis 6, mit einer am Flurförderzeug (1) angeordneten Sensorik (5) zur Erkennung von Informationen im Betriebsbereich des Flurförderzeugs (1) und einer Datenverarbeitungseinrichtung (9) zur Auswertung dieser Informationen und Erstellung von Navigationsanweisungen und/oder Steuerungsbefehlen zur Navigation des Flurförderzeugs (1), wobei die Datenverarbeitungseinrichtung (9) dazu eingerichtet ist, aus Sensordaten einer Erkundungsfahrt eine Umgebungskarte in einem Fahrzeugkoordinatensystem (2) zu erstellen und aus Sensordaten einer Navigationsfahrt eine Lokalisierung des Flurförderzeugs (1) in der Umgebungskarte durchzuführen, wobei mindestens eine Markierung (6, 7, 8, 10, 11, 12, 13) mit bekannter globaler Position im Betriebsbereich des Flurförderzeugs (1) vorgesehen ist, die durch die Sensorik (5) detektierbar ist, **dadurch gekennzeichnet, dass** die Datenverarbeitungseinrichtung (9) dazu eingerichtet ist, aufgrund der bekannten Position der Markierung (6, 7, 8, 10, 11, 12, 13) ein Referenzkoordinatensystem (3) des Betriebsbereichs festzulegen und die im Fahrzeugkoordinatensystem (2) erstellte Umgebungskarte mit dem Referenzkoordinatensystem (3) des Betriebsbereichs abzugleichen und die Lokalisierung des Flurförderzeugs (1) im Fahrzeugkoordinatensystem (2) in eine Lokalisierung des Flurförderzeugs (1) im Referenzkoordinatensystem (3) des Betriebsbereichs zu überführen.

## Claims

1. Method for navigating an industrial truck (1) having a sensor system (5) for detecting information in the operating area of the industrial truck (1) and a data processing device (9) for evaluating this information and creating navigation instructions and/or control commands for navigating the industrial truck (1), wherein, on the basis of an exploratory journey, an environment map is first of all created in a vehicle coordinate system (2) in the data processing device (9) with the aid of the sensor system (5) and, in a later navigation journey, a scene currently recorded by the sensor system (5) is compared with the environment map in the data processing device (9) and the industrial truck (1) is located in the vehicle coordinate system (2), wherein at least one marker (6, 7, 8, 10, 11, 12, 13) with a known global position is detected in the operating area of the industrial truck (1) by means of the sensor system (5), **characterized in that** a reference coordinate system (3) of the operating area is defined by evaluating the sensor data in the data processing device (9), and the environment map created in the vehicle coordinate system (2) is compared with the reference coordinate system (3) of the operating area in the data processing device (9), and the location of the industrial truck (1) in the vehicle coordinate system (2) is converted into a location of the industrial truck (1) in the reference coordinate system (3) of the operating area in the data processing device (9).

2. Method according to Claim 1, **characterized in that** use is made of a marker (6, 7, 8, 10, 11, 12, 13) whose three-dimensional pose, in particular whose translational position in the three spatial axes x, y and z as well as whose spatial orientation by virtue of spatial angle rotations around the three spatial axes, is known.

3. Method according to Claim 1 or 2, **characterized in that** use is made of at least two markers (6, 7, 8, 10, 11, 12, 13) whose translational positions in the three spatial axes x, y and z are known.

4. Method according to one of Claims 1 to 3, **characterized in that** a natural marker (6, 7, 8, 10), in particular an infrastructure element, for example a sign (8), a shelf support (10) or a wall (6; 7), is used as a marker (6, 7, 8, 10, 11, 12, 13).

5. Method according to one of Claims 1 to 3, **characterized in that** an artificial marker (11, 12, 13), in particular a reflector, a QR code or an Aruco marker, is used as a marker (6, 7, 8, 10, 11, 12, 13).

6. Method according to one of Claims 1 to 3 or 5, **characterized in that** use is made of at least one marker (6, 7, 8, 10, 11, 12, 13) containing machine-readable information about its global position, which information is retrieved by means of the sensor system (5) and is evaluated in the data processing device (9) in order to compare the environment map created in the vehicle coordinate system (2) with the reference coordinate system (3).

7. System for carrying out the method for navigating an industrial truck (1), in particular a method according to one of Claims 1 to 6, having a sensor system (5) arranged on the industrial truck (1) for detecting information in the operating area of the industrial truck (1) and a data processing device (9) for evaluating this information and creating navigation instructions and/or control commands for navigating the industrial truck (1), wherein the data processing device (9) is set up to create an environment map in a vehicle coordinate system (2) from sensor data from an exploratory journey and to locate the industrial truck (1) in the environment map from sensor data from a navigation journey, wherein at least one marker (6, 7, 8, 10, 11, 12, 13) with a known global position is provided in the operating area of the industrial truck (1) and can be detected by the sensor system (5), **characterized in that** the data processing device (9) is set up to define a reference coordinate system (3) of the operating area on the basis of the known position of the marker (6, 7, 8, 10, 11, 12, 13) and to compare the environment map created in the vehicle coordinate system (2) with the reference coordinate system (3) of the operating area and to convert the location of the industrial truck (1) in the vehicle coordinate system (2) into a location of the industrial truck (1) in the reference coordinate system (3) of the operating area.

## Revendications

1. Procédé de navigation d'un chariot de manutention (1) avec un système de capteurs (5) destiné à identifier des informations dans la zone de fonctionnement du chariot de manutention (1) et un dispositif de traitement de données (9) destiné à évaluer lesdites informations et à générer des instructions de navigation et/ou des ordres de commande pour la navigation du chariot de manutention (1), une carte d'environnement dans un système de coordonnées de véhicule (2) étant d'abord générée à l'aide du système de capteurs (5) dans le dispositif de traitement de données (9) en partant d'un trajet de reconnaissance et une scène actuellement enregistrée par le système de capteurs (5) étant comparée, dans le dispositif de traitement de données (9), à la carte d'environnement lors d'un trajet de navigation ultérieur et une localisation du chariot de manutention (1) étant mise en œuvre dans le système de coordonnées de véhicule (2), au moins un marquage (6, 7, 8, 10, 11, 12, 13) avec une position globale connue dans la zone de fonctionnement du chariot de manutention (1) étant détecté au moyen du système de capteurs (5), **caractérisé en ce qu'**un système de coordonnées de référence (3) de la zone de fonctionnement est défini par l'évaluation des données de capteur dans le dispositif de traitement de données (9), et la carte d'environnement générée dans le système de coordonnées de véhicule (2) est comparée au système de coordonnées de référence (3) de la zone de fonctionnement dans le dispositif de traitement de données (9), et la localisation du chariot de manutention (1) dans le système de coordonnées de véhicule (2) dans le dispositif de traitement de données (9) est convertie en une localisation du chariot de manutention (1) dans le système de coordonnées de référence (3) de la zone de fonctionnement.

2. Procédé selon la revendication 1, **caractérisé en ce qu'**un marquage (6, 7, 8, 10, 11, 12, 13) est utilisé dont la pose tridimensionnelle, en particulier dont la position de translation dans les trois axes spatiaux x, y et z et dont l'orientation spatiale par des rotations à des angles solides autour des trois axes spatiaux sont connues.

3. Procédé selon la revendication 1 ou 2, **caractérisé en ce qu'**au moins deux marquages (6, 7, 8, 10, 11, 12, 13) sont utilisés, dont les positions de translation dans les trois axes spatiaux x, y et z sont connues.

4. Procédé selon l'une des revendications 1 à 3, **caractérisé en ce qu'**est utilisé en tant que marquage (6, 7, 8, 10, 11, 12, 13) un marquage naturel (6, 7, 8, 10), en particulier un élément d'infrastructure, par exemple un panneau (8), un support de rayonnage (10) ou une paroi (6 ; 7).

5. Procédé selon l'une des revendications 1 à 3, **caractérisé en ce qu'**est utilisé en tant que marquage (6, 7, 8, 10, 11, 12, 13) un marquage artificiel (11, 12, 13), en particulier un réflecteur, un code QR ou un marquage ArUco.

6. Procédé selon l'une des revendications 1 à 3 ou 5, **caractérisé en ce qu'**est utilisé au moins un marquage (6, 7, 8, 10, 11, 12, 13), qui contient des informations lisibles par machine concernant sa position globale, qui sont appelées au moyen du système de capteurs (5) et sont évaluées dans le dispositif de traitement de données (9) pour comparer la carte d'environnement générée dans le système de coordonnées de véhicule (2) au système de coordonnées de référence (3).

7. Système de mise en œuvre du procédé de navigation d'un chariot de manutention (1), en particulier d'un procédé selon l'une des revendications 1 à 6, avec un système de capteurs (5) disposé sur le chariot de manutention (1), destiné à identifier des informations dans la zone de fonctionnement du chariot de manutention (1) et un dispositif de traitement de données (9) destiné à évaluer lesdites informations et à générer des instructions de navigation et/ou des ordres de commande pour la navigation du chariot de manutention (1), le dispositif de traitement de données (9) étant mis au point pour générer une carte d'environnement dans un système de coordonnées de véhicule (2) à partir de données de capteur d'un trajet de reconnaissance et pour mettre en œuvre, à partir de données de capteur d'un trajet de navigation, une localisation du chariot de manutention (1) dans la carte d'environnement, au moins un marquage (6, 7, 8, 10, 11, 12, 13) avec une position globale connue étant prévu dans la zone de fonctionnement du chariot de manutention (1), qui peut être détectée par le système de capteurs (5), **caractérisé en ce que** le dispositif de traitement de données (9) est mis au point pour définir, en raison de la position connue du marquage (6, 7, 8, 10, 11, 12, 13), un système de coordonnées de référence (3) de la zone de fonctionnement et comparer la carte d'environnement générée dans le système de coordonnées de véhicule (2) au système de coordonnées de référence (3) de la zone de fonctionnement et convertir la localisation du chariot de manutention (1) dans le système de coordonnées de véhicule (2) en une localisation du chariot de manutention (1) dans le système de coordonnées de référence (3) de la zone de fonctionnement.
